# EUROPEAN PATENT APPLICATION

(11) **EP 3 719 820 A1**
(43) Date of publication of application: **07.10.2020**
(21) Application number: 20172543.9
(22) Date of filing: 20.02.2018
(51) Int. Cl.: H01G 11/74, H01G 11/84, H01G 13/00, H01G 13/02, H01M 2/26, H01M 10/04, H01G 11/76, H01M 4/70, B65H 19/22, B65H 19/26, B65H 20/24, B26D 1/03, H01M 10/0587

(54) **MACHINING APPARATUS AND METHOD**

(30) Priority: 21.02.2017 IT 201700019129; 21.02.2017 IT 201700019147; 21.02.2017 IT 201700019166
(62) Divisional of application: 18712011.8
(71) Applicant: Manz Italy S.r.l., 40037 Sasso Marconi (BO) (IT)
(72) Inventor: SALE, Massimiliano, 40037 SASSO MARCONI (BO) (IT); BARBIERI, Pantaleone, 40129 BOLOGNA (IT)
(74) Representative: Mangini, Simone

(57) **Abstract**

A machining apparatus and method are disclosed, with two blanking devices arranged on a feed path of material for blanking portions of material forming electrode tabs distributed in a step, by varying the period of the working cycles of the two blanking devices independently of one another at each blanking to increase progressively the step between the electrode tabs; the machined material is intended to be wound around a core to produce an electrical energy storage device; the increase in the step between the electrode tabs means that the electrode tabs are aligned on one another in the wound product, taking account of the fact that the dimensions of the product increase during winding.

## Description

### Background of the invention

The invention relates to a machining apparatus and method, in particular for machining continuous material (in the form of belt, strip, sheet, etc).

Specifically but not exclusively, the invention can be applied to produce electrical energy storage devices, it being provided, in particular, that the material machined by the apparatus and/or method in question is wound to make an electrical energy storage device.

In particular, it is possible to provide for the machining performed with the apparatus and/or method of the invention comprising blanking portions of material to form electrode tabs of an electrical energy storage device.

It is known to produce electrical energy storage devices by winding material around a core, where the material, before being wound, is cut to form a plurality of electrode tabs that are spaced apart from one another that, in the wound product, will have to be superimposed on one another.

Patent publication WO 2014/135288 A1 shows a laser cutting system that cuts an electrode belt to form a plurality of electrode tabs that in the wound product will be superimposed on one another.

Patent publication US 2009/0239133 A1 shows a wound product with two electrode belts, one positive and the other negative, in which each belt has various superimposed electrode tabs that are successively laminated.

Patent publication WO 2013/186745 A2 shows blanking of a continuously advancing electrode belt, in which a portion of the belt is stopped intermittently by a conveying system with two eccentric rollers.

One of the problems of the prior art is to ensure correct reciprocal superimposing of the electrode tabs in the wound product, taking account of the fact that the dimensions of the wound product increase progressively.

### Summary of the invention

One object of the invention is to provide a machining apparatus and/or method that is able to solve the aforesaid prior art problem.

One advantage is to provide a machining apparatus and/or method that is suitable for producing electrical energy storage devices.

One advantage is to enable electrode tabs to be formed on the material being machined in the positions that are suitable for ensuring correct reciprocal superimposing of the tabs in the wound product.

One advantage is to make an apparatus and/or a method for machining continuous material with high productivity.

One advantage is to permit the production of electrical energy storage devices of high quality with high efficiency.

One advantage is to make available a machining apparatus, in particular for blanking material, which is constructionally simple and cheap.

Such advantages and still others are achieved by an apparatus and/or a method according to one or more of the claims set out below.

In one embodiment, one machining method comprises the steps of: feeding material along a path; performing a first machining task with a first machining device that operates along the path with alternating opening and closing operating cycles; performing a second machining task, with a second machining device that operates along the path downstream of the first machining device with alternating opening and closing operating cycles; varying the length of the portion of path comprised between the first and the second machining device (at each operating cycle) in such a manner as to vary the distance between the machined portions of material.

The machining tasks may comprise, in particular, blanking to make electrode tabs, in which the variation in distance (step) between the electrode tabs means that in the wound product the tabs can be superimposed on one another, taking account of the dimensions of the wound product.

In particular, the length of the feed path portion comprised between the two machining (blanking) devices is increased progressively at each operating cycle so as to increase the step between the machined portions.

In one embodiment, a machining apparatus comprises: a material feed path; two machining (blanking) devices arranged on the feed path to machine (blank), with alternating operating cycles, portions of material that are spaced apart from one another (forming electrode tabs); means for varying (increasing) the length of the path portion comprised between the two machining devices (at each operating cycle) such as to vary (increase) the distance (step) between the machined portions of material. The material is intended to be wound to form a wound product (electrical energy storage device) and the aforesaid distance variation is used so that in the wound product the machined portions are in desired positions

(alignment of the electrode tabs), taking account of the fact that the dimensions of the wound product increase progressively during winding.

### Brief description of the drawings

The invention can be better understood and implemented with reference to the attached drawings that illustrate one embodiment thereof by way of non-limiting example.
Figure 1 is a diagram, in a vertical elevation, of a first embodiment of a machining apparatus made according to the present invention.
Figure 2 is a diagram, in a top view, of the two blanking devices of the apparatus of figure 1.
Figure 3 shows, in a partial top view, one product embodiment (electrode belt) obtained by the machining apparatus of figure 1.
Figure 4 is a fictitious representation in order to show the various relative positions adopted by the product of figure 3 with respect to the two blanking devices of the apparatus of figure 1 in various blanking cycles during machining.
Figures 5 to 8 show four steps in sequence of the machining of the product of figure 3 by the apparatus of figure 1, in a fictitious representation in order to show the variation of the distances L1, L2, L3, L4 of the material feed path portion between the two blanking devices.
Figure 9 is a diagram, in a vertical elevation, of a second embodiment of a machining apparatus made according to the present invention.
Figure 10 is a diagram, in a vertical elevation, of a third embodiment of a machining apparatus made according to the present invention.
Figure 11 is a diagram, in a vertical elevation, of a fourth embodiment of a machining apparatus made according to the present invention.
Figure 12 is the diagram of figure 11 in another operating configuration.
Figure 13 illustrates schematically one embodiment of how the product (electrode belt) of figure 3 can be wound to form an electrical energy storage device, without showing, for the sake of simplicity, the other components of the device (for example the other electrode and/or the separator/s).
Figure 14 illustrates schematically one embodiment of a wound product that includes two electrode belts (cathode and anode), without showing, for the sake of simplicity, the other components of the electrical energy storage device (the separator/s).
Figures 15 and 16 show two embodiments of wound product that are similar to those of figures 13 and 14, in which the electrode tabs are present only on one half of the electrical energy storage device.

### Detailed description

With reference to the figures mentioned above, for greater clarity and simplicity of exposition, analogous elements have been indicated by the same numbering, even if they belong to different embodiments.

With 1, overall a machining apparatus has been indicated, in particular for machining (for example blanking or cutting) material/s M in the form of a belt, strip, sheet, etc. The machining apparatus 1 may be used, in particular, in the production of an electrical energy storage device, for example for blanking a material M (electrode belt) so as to form a plurality of electrode tabs t1, t2, t3, ...., tN, distributed in the length of the material M at preset mutual distances (non-constant distances). The material M may comprise suitable material for forming an electrical energy storage device. The material M may comprise, for example, an electrode belt or other material of known type that is not illustrated here in greater detail.

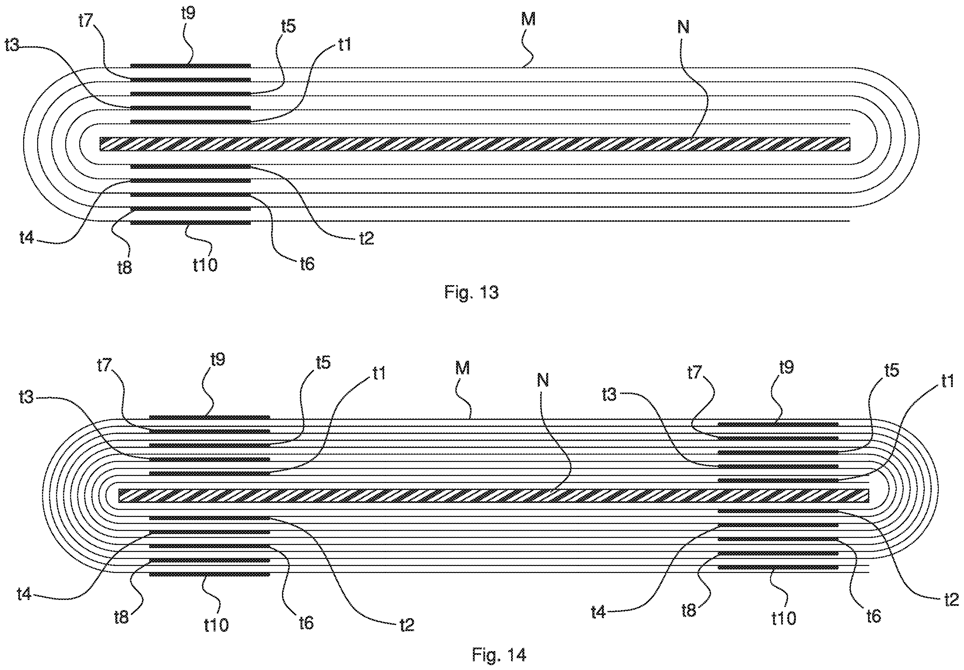

The material M, machined owing to the preliminary use of the machining apparatus 1, may then be wound around a core N, as shown in figures 13-16, for example to form an electrical energy storage device. Below, reference will be made, in particular, to Figure 13 that, for the sake of simplicity, does not illustrate other components of the electrical energy storage device, like for example the other electrode belt (with the opposite sign) and one or more separating belts.

The wound product may comprise, as in this embodiment, a plurality of winding coils of the material M around the core N. The wound product may comprise a plurality of electrode tabs t1, t2, t3, ...., tN, superimposed on one another. The electrode tabs t1, t2, t3, ...., tN, may be made by the machining apparatus 1 (blanking apparatus). The machining apparatus 1 may be configured to form the electrode tabs t1, t2, t3, ...., tN, in preset positions in the longitudinal extent of the material M so that the tabs are mutually superimposed, considering that the dimensions of the wound product increase progressively at each winding revolution, so that the length of each winding coil is greater than the more interior coils.

The machining apparatus 1 may comprise, in particular, a feed path of the material M. The feed path may comprise, for example, means (for example of known and not illustrated type) for dragging the material M along the path, means (for example of the roller type) for guiding the material M along the path, means (for example of known type and not illustrated) for tensioning the material M along the path.

The machining apparatus 1 may comprise, in particular, first machining means 4 arranged along the aforesaid feed path for operating intermittently (with a determined period that, as will be seen, will be variable), in particular for performing a succession of working cycles on the material M, in which at each working cycle the first machining means 4 adopts at least one open position in which it leaves the transit of the material M free and at least one closed position in which it performs at least one machining task on the material M.

The machining apparatus 1 may comprise, in particular, second machining means 6 arranged along the aforesaid feed path for operating intermittently, in particular for performing a succession of working cycles on the material M, in which at each working cycle the second machining means 6 adopts at least one open position in which it leaves the transit of the material M free and at least one closed position in which it performs at least one machining task on the material M.

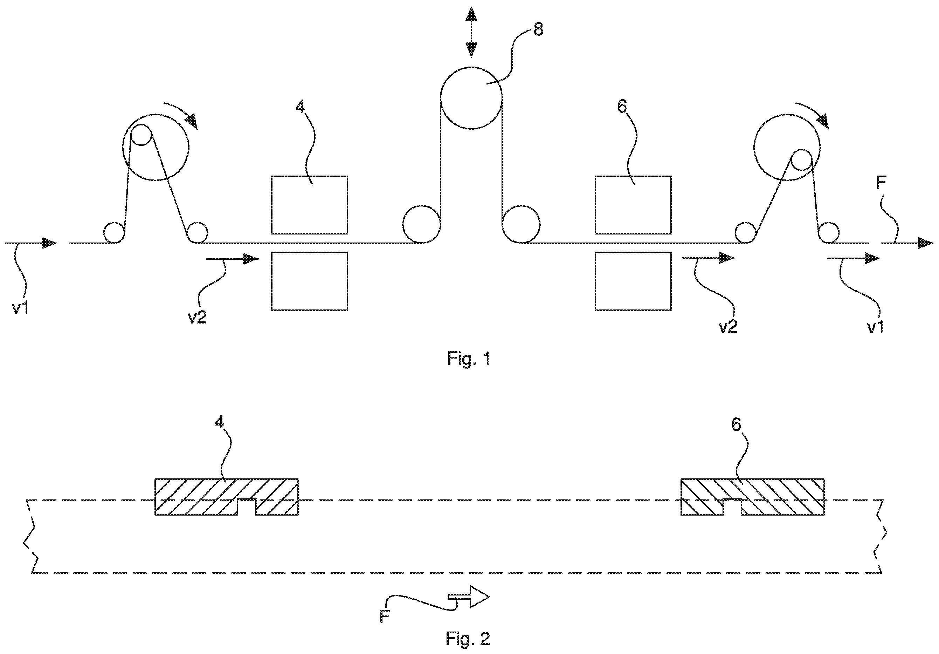

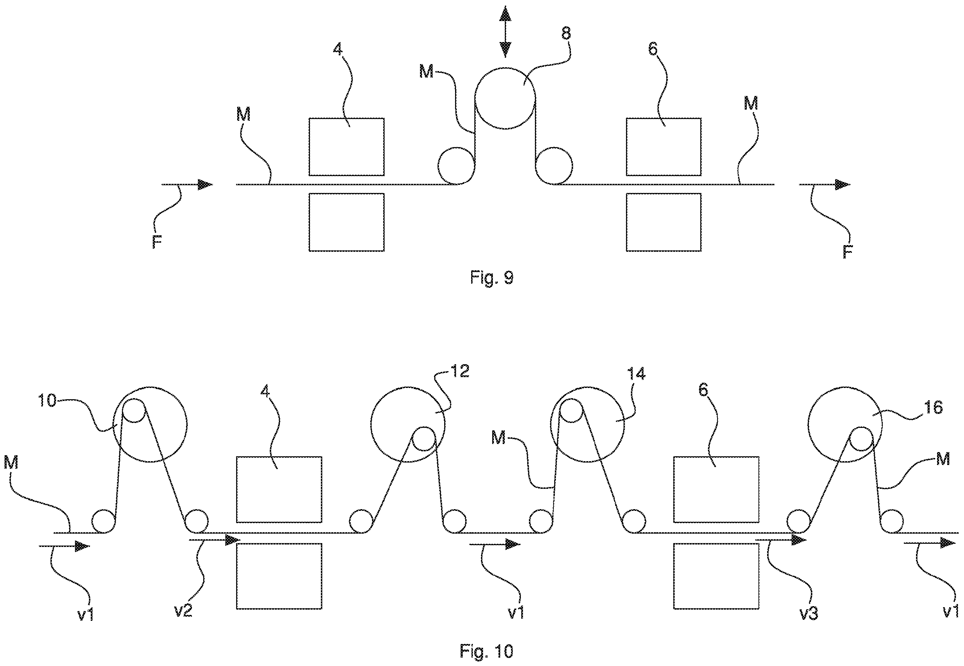

The second machining means 6 may be arranged, in particular, after the first machining means 4, with reference to a feed direction F of the material along the path. The period of the working cycles of the second machining means 6 may be the same as the period of the working cycles of the first machining means 4, as in the embodiments of figures 1 and 9. The period of the working cycles of the second machining means 6 may be different and adjustable regardless of the period of the working cycles of the first machining means 4, as in the embodiments of figures 10 and 11-12.

The first machining means 4 may comprise, in particular, at least one first blanking device for blanking the material for forming electrode tabs of an electrical energy storage device. The second machining means 6 may comprise, in particular, at least one second device for blanking the material for forming electrode tabs of an electrical energy storage device. The first machining means 4 may comprise, in particular, at least one pair of members (blanking half moulds) that are movable with respect to one another by being driven to operate on the material M. The second machining means 6 may comprise, in particular, at least one pair of members (blanking half moulds) that are movable with respect to one another by being driven to operate on the material M.

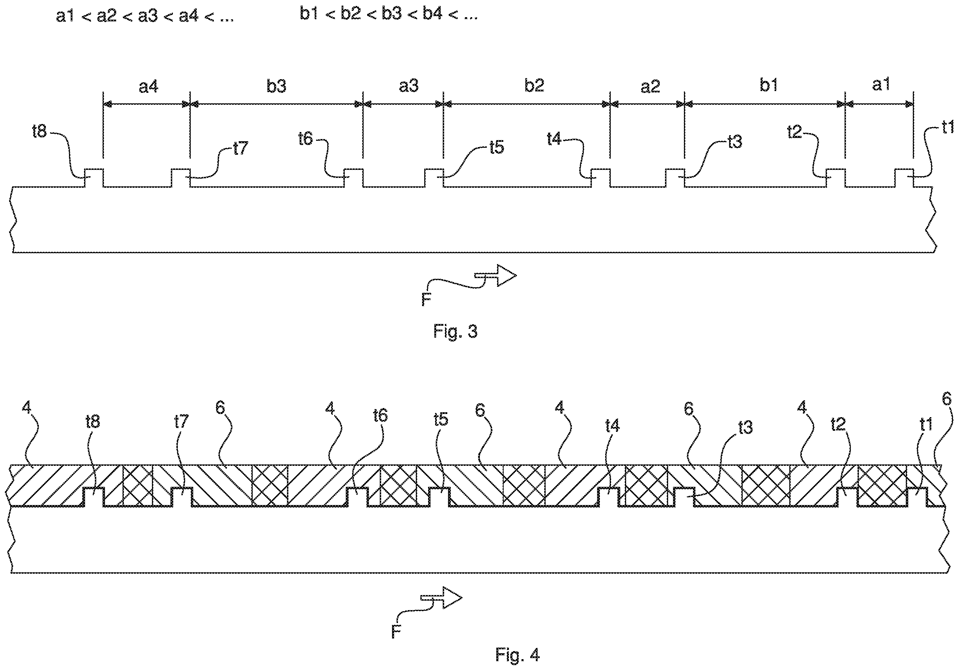

In figure 2 the profile is shown schematically of the blanking members of the and second machining means 4 and 6, which are suitable for forming the electrode tabs on an electrode belt. In figure 3 the profile is shown schematically of the machined material M comprising the various electrode tabs t1, t2, t3, ..., obtained by the first and the second machining means 4 and 6.

In particular, each of the two aforesaid machining means 4 and 6 (blanking devices) may comprise two (opposite) machining (blanking) half moulds that are movable in relation to another for operating intermittently, adopting a closed position in which the material M is machined (blanked) and an open position in which the material M can advance between the two machining half moulds.

The first machining means 4 may be configured, for example, to form a part of the electrode tabs t2, t4, t6, t8, ..., for the electrical energy storage device. The second machining means 6 may be configured, for example, to form another part of the electrode tabs t1, t3, t5, t7, ..., for the electrical energy storage device.

The machining apparatus 1 may comprise, in particular, means for varying the period/frequency of the working cycles of the first machining means 4 and/or of the second machining means 6 whilst the material M advances along the path.

The machining apparatus 1 may comprise, in particular, means for varying the length of a portion of the path of the material M comprised between the first machining means 4 and the second machining means 6.

The means for varying the length may comprise, as in the embodiments of figure 1 and 9, at least one element 8 on which the material M slides that advances along the feed path. The position of the aforesaid element 8 may be adjustable. This position may be adjustable by driving means (for example an electric motor that is of known type and is not illustrated) that controls a movement of the aforesaid element 8. The aforesaid element 8 may be, in particular, rotatable around an axis. The aforesaid elements 8 may comprise, for example, at least one wheel or pulley that is (freely) rotatable around a rotation axis, in which the position of the rotation axis may be adjustable.

The means for varying the length may be controlled, in particular, in such a manner as to vary the aforesaid length when the first machining means 4 is in an open position (for each working cycle) and/or when the second machining means 6 is in an open position (for each working cycle). The means for varying the length may be controlled so as to increase progressively the aforesaid length of the path portion at each working cycle of the first machining means and/or at each working cycle of the second machining means.

The aforesaid means for varying the period/frequency may comprise, as in the embodiment in figure 1, first guide means 10 arranged along the feed path upstream of the first machining means 4, to receive the incoming material M at a first (constant) speed v1 and to release the exiting material M at a second (variable) speed v2.

The aforesaid means for varying the period/frequency may comprise, as in the embodiment in figure 1, second guide means 12 arranged along the feed path downstream of the second machining means 6 to receive the incoming material M at the second speed v2 and to release the exiting material M at the first speed v1. The second speed v2 may be variable, for example so as to be intermittently nil at set intervals of time during which the first machining means 4 and/or the second machining means 6 are in a closed position. The first speed v1 may be, in particular, always greater than zero (continuous advancement), for example a constant speed v1.

The first and the second guide means 10 and 12 are configured so as to collaborate together and operate in mutual coordination so that the portion of material M comprised between the two guide means 10 and 12 alternates periodically stop steps and advancement steps. In the stop steps, the machining means 4 and 6 can close and machine the material M. In the advancement steps the material may first accelerate to make up for the stop and then decelerate to prepare for the subsequent stop. The advancement of the material M in the path portion that precedes and in the path portion that follows the two guide means 10 and 12 may be continuous (for example a constant speed v1).

The first guide means 10 may comprise, in particular, guide devices with an eccentric roller driven by an electric cam, which are for example identical to those disclosed in patent publication WO 2013/186745 A2. The second guide means 12 may comprise, in particular, guide devices with an eccentric roller driven by an electric cam, which are for example identical to those disclosed in patent publication WO 2013/186745 A2.

The aforesaid means for varying the period/frequency may further comprise (programmable electronic) control means configured so as to vary the advancement period/frequency of the material M, varying, in particular, the time of the advancement steps of the material M, i.e. the time that elapses between two consecutive stop steps of the material M (the stop period may remain constant).

The machining apparatus may comprise, in particular, programmable electronic control means provided with computer programme instructions for controlling the aforesaid means to vary the aforesaid first and/or second guide means.

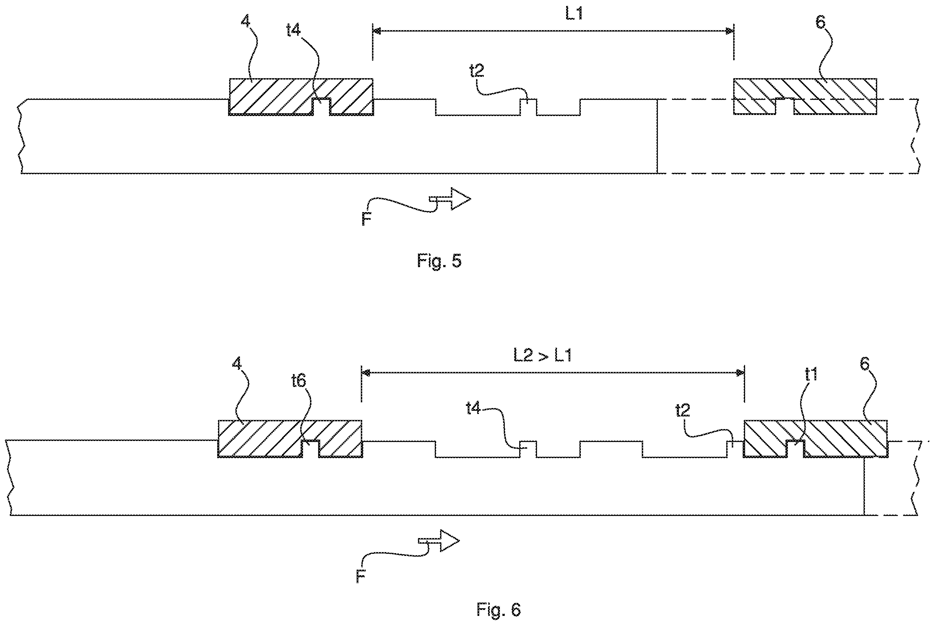

One possible operation of the machining apparatus 1 of figure 1 is disclosed below with reference to figures 5 to 8. The product obtained from the machining may comprise, for example, the electrode belt illustrated schematically in figure 3, which may be wound to form the wound product illustrated schematically in figure 13, where the various electrode tabs are exactly superimposed on one another.

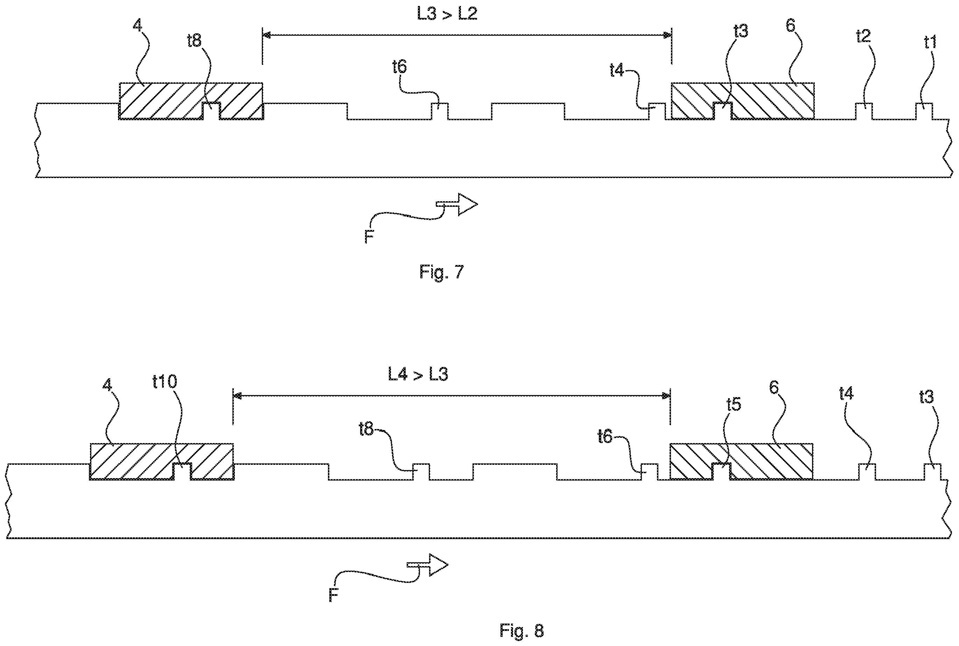

The material M, that advances along the feed path at a continuous advancement speed v1 (for example constant speed), comprises a portion of material that in one path portion (comprised between the guide means 10 and 12) is arrested intermittently. The portion of material M has a first stop period (not illustrated), in which the first machining means 4 forms the electrode tab t2. In a second stop period (figure 5), the first machining means 4 forms the electrode tab t4. In a third stop period (figure 6) the first machining means 4 forms the electrode tab t6 whereas the second machining means 6 forms the tab t1. In a fourth stop period (figure 7) the first machining means 4 forms the electrode tab t8 whereas the second machining means 6 forms the tab t3. In a fifth stop period (figure 8) the first machining means 4 forms the electrode tab t10 whereas the second machining means 6 forms the tab t5.

The various tabs t1, t2, t3, ..., are distributed according to a double step: the first step has been indicated with a1, a2, a3, ... and the second step (of a length that is greater on average than the first step) with b1, b2, b3, ... (figure 3). The first step a1, a2, a3, ... and the second step b1, b2, b3, ... alternate between one another. The double step distribution occurs because in the wound product (figure 13) the tabs will be superimposed on a non-symmetrical position (on a non-circular winding core) on both the halves of the wound product (in figure 13, both above and below). The first step and the second step will both be progressively variable as the dimensions of the wound product increase progressively at each winding revolution, so that a1 < a2 < a3 < ... and b1 < b2 < b3 < ... (figure 3).

With reference to figure 3, the distance between the electrode tabs t2 and t4 (formed by the first machining means 4) is equal to b1 + a2. The distance between the electrode tabs t4 and t6 (formed by the first machining means 4) is equal to b2 + a3. The increase of the distance between the first pair of electrode tabs t2-t4 and the second pair of electrode tabs t4-t6 is equal to b2 + a3 - (b1 + a2) = Δ'.

The distance between the electrode tabs t1 and t3 (formed by the second machining means 6) is equal to a1 + b1. The distance between the electrode tabs t3 and t5 (formed by the second machining means 6) is equal to a2 + b2. The increase of the distance between the first pair of electrode tabs t1-t3 and the second pair of electrode tabs t3-t5 is equal to a2 + b2 - (a1 + b1) = Δ", where Δ" ≠ Δ' (in particular Δ' > Δ").

Adjusting the distribution of the electrode tabs with a double step may thus be achieved, as in this specific case, by adjusting in a different manner the variable distance between the electrode tabs t2, t4, t6, t8, ... formed by the first machining means 6 with respect to the variable distance between the electrode tabs t1, t3, t5, t7, ... formed by the second machining means 6.

Each of the machining apparatuses disclosed here may comprise, for this purpose, two adjusting systems (driven independently of one another) that cooperate together, in a coordinated manner, to permit adjustment with two steps, each of which is variable in a different mode from the other (double step with double variability).

A first adjusting system may comprise, as in the embodiment in figure 1, the (programmable electronic) control means configured for varying the period/frequency of the working cycle of the first and second guide means 10 and 12 and, accordingly, of the first and second machining means 4 and 6 that operate together (simultaneously with one another) at the same periods/frequencies.

A second adjusting system may comprise, as in the embodiment in figure 1, the means set up for varying (for example progressively lengthening) the length L1, L2, L3, ..., of the path portion comprised between the two machining means 4 and 6. In Figures 5 to 8 the variation of the length of the path portion is represented. The representation is fictitious because, actually, the machining means 4 and 6 does not undergo shifts along the path of the material M, whereas the adjusting element 8 is the adjusting element that shifts to vary the length of the path portion of the material M comprised between the two machining means 4 and 6.

The two adjusting systems mentioned above, which are activated in mutual cooperation, enable both the variability of the first step (a1, a2, a3, etc., in this case the "shorter" step), and the variability of the second step (b1, b2, b3, etc., in this case the "longer" step) to be modulated, or similarly, both the variability of the distance between the portions of material worked by the first machining means 4 (electrode tabs t2, t4, t6, etc.), and the variability of the distance between the portions of material machined by the second machining means 6 (electrode tabs t1, t3, t5, etc.).

Figure 4 illustrates the relative positions of the blanking members of the first and second machining means 4 and 6 with respect to the material M during various blanking steps, in which for the sake of simplicity of representation, the material has been considered to be stationary and the blanking members to be movable along the path, although in reality the material is movable and the blanking members operate in the same position along the path. With Z, superimposing zones have been indicated in which the blanking actions of the two blanking members are superimposed on one another (in a redundant manner). It is seen how the extent of the superimposing zones Z is greatest at the start (it cannot be greater than the distance or step between the first two electrode tabs t1 and t2) to then decrease gradually as the formation of the electrode tabs proceeds. The maximum distance or step that is reachable between two consecutive electrode tabs corresponds to the situation in which the overlap Z is nil.

The control of the two adjusting systems may be set on the basis of preset calculations, taking account of the various parameters - such as for example the characteristics (thickness, type, etc.) of the material to be wound, the dimensions of the winding core, the desired positions of the electrode tabs in the wound product, etc. -, even if it is possible to provide for the control being perfected empirically, after the first tests, to perform subsequently the appropriate adjustments.

Figure 14 shows a product consisting of two (electrode) belts wound together. In general, an electrical energy storage device in fact comprises two electrode belts of opposite sign (anode and cathode), alternating with separating belts (not illustrated), each provided with its own electrode tabs. Each electrode belt may be subjected to a forming (blanking) process for forming the various electrode tabs t1, t2, t3, ..., tN, for example as disclosed previously, after which the electrode belts may be coupled (together with the separating belts) to form the winding that will give rise to the electrical energy storage device.

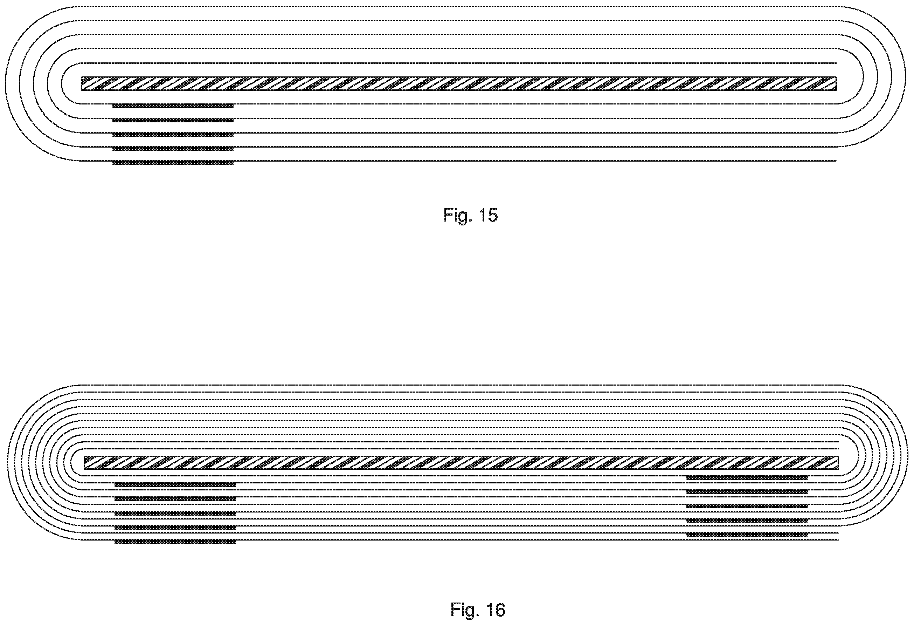

It is possible to use just one of the two adjusting systems, in particular only the means for varying the length, if regulating a double step, as in the embodiment disclosed above, is not necessary, but a single step, for example to make a simpler wound product (for example if the electrode tabs are arranged on a plane of symmetry of the wound product). In figure 15 a wound product is shown that is analogous to that of figure 13, in which however the electrode tabs are arranged only on one half of the product, so that a single step may be adjusted, with a single adjusting system. In figure 16, winding is shown with two electrode belts, analogous to that of figure 14, in which however the electrode tabs are arranged only on one half of the product.

In one embodiment, it is possible to use only one adjusting system comprising the first guide means 10 and the second guide means 12, controlled in such a manner as to vary the operating period, i.e. to vary (increase progressively at each cycle) the interval of time between two consecutive stops of the material M in the zone in which the first machining means 4 operates.

With reference to figure 9, one embodiment is disclosed of a machining apparatus 100 that is able to implement the process disclosed in figures 4 to 8 (adjusting the double step by a double adjusting system) and/or making the product of figure 3. In the machining apparatus 100 the material M is fed along the feed path in an advancement direction F with an intermittent motion comprising the alternation of the advancement and stop cycles of the material. The open positions of the first machining means 4 and/or of the second machining means 6 will be provided during the advancement steps of the material M. The closed positions of the first machining means 4 and/or of the second machining means 6 will be provided during the stop steps of the material.

In this embodiment, the means for varying the period/frequency may comprise control means (for example electronic and programmable control means) configured for varying the period of the material M advancement and stop cycles and, accordingly, the period of the opening and closing cycles of the first and second machining means 4 and 6. The machining apparatus 100 may comprise means for varying the length that is analogous to that disclosed with reference to the apparatus 1 of figure 1 (provided with an adjustable position element 8).

Also the machining apparatus 100 may thus be provided with two adjusting systems (one that is able to vary the length of the path portion between the two machining means and the other that is able to vary the period/frequency of the machining) that, by working in mutual coordination, can make electrode tabs distributed in the length of the material according to the desired variable double step.

With reference to figures 10 and 11-12, another two embodiments of machining apparatuses 101 and 102 are disclosed, each of which is able to implement the process disclosed in figures 4 to 8 (adjusting the double step by a double adjusting system) and/or making the product of figure 3.

In each of the machining apparatuses 101 and 102, the period of the working cycles of the second machining means 6 may be different from the period of the working cycles of the first machining means 4.

In other words, the various closing and opening steps of one of the two machining means may proceed independently and not simultaneously (with different periods/frequencies) with respect to those of the other of the two machining means, whereas in the machining apparatuses 1 and 100 disclosed above the first machining means 4 opened and closed substantially in a simultaneous manner with the second machining means 6, with periods/frequencies that are variable in the same manner for both.

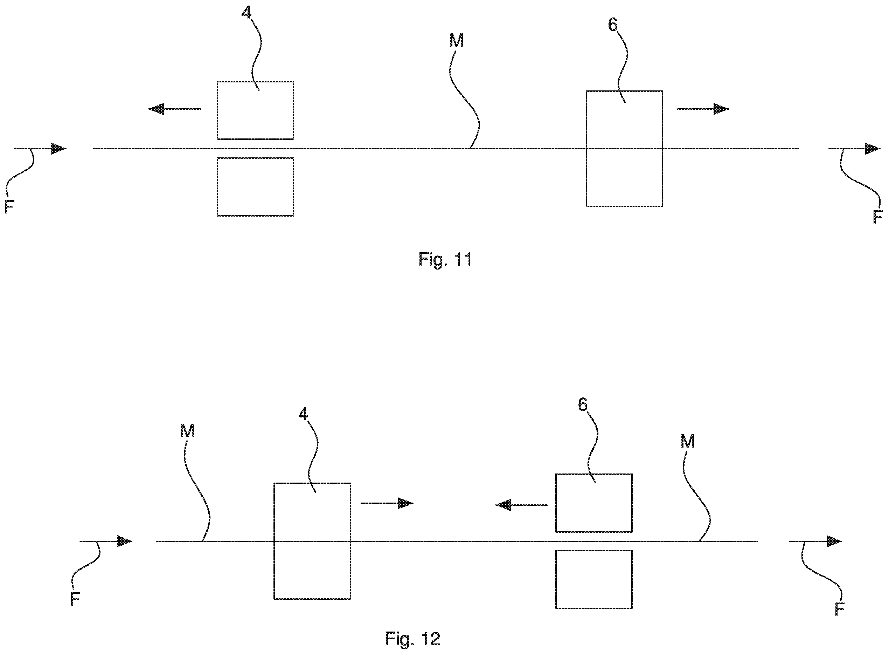

Each of the machining apparatuses 101 (figure 10) and 102 (figures 11 and 12) comprises first and second means for varying the period of the working cycles of the first and second machining means 4 and 6 (whilst the material advances along the path) independently of and differently from one another.

In the machining apparatus 101 of figure 10 the first means for varying the period is substantially analogous to the means for varying the period disclosed with reference to the machining apparatus 1 of figure 1. The machining apparatus 101 in fact comprises first guide means 10, arranged before the first machining means 4, and second guide means 12, arranged after the first machining means 4 but, in this case, before the second machining means 6. The first and second guide means 10 and 12 of the machining apparatus 101 may comprise, in particular, guide devices with an eccentric roller driven by a first electric cam, for example identical to that disclosed in patent publication WO 2013/186745 A2.

The machining apparatus 101 further comprises third guide means 14, arranged after the second guide means 12 and before the second machining means 6, and fourth guide means 16, arranged after the second machining means 6. The third and fourth guide means 14 and 16 are substantially analogous to the first and second guide means 10 and 12. The third and fourth guide means 14 and 16 may comprise, in particular, guide devices with an eccentric roller driven by a second electric cam (in particular different from the first electric cam), that are for example identical to those disclosed in patent publication WO 2013/186745 A2.

The first and second electric cam may be set in such a manner as to make a double adjusting system that is able to form the electrode tabs t1, t2, t3, etc, which are distributed with a double variable step.

The first guide means 10 may receive the incoming material M at a first (constant) speed v1 and release the exiting material M at a second speed v2 (variable, in particular in a periodic manner). The second guide means 12 may receive the incoming material M at the second speed v2 and release the exiting material M at the first speed v1. The second speed v2 may be variable so as to be intermittently nil in determined intervals of time during which the first machining means 4 is in the closed position. The first speed v1 may be, in particular, always greater than zero (continuous advancement), for example constant.

The third guide means 14 may receive the incoming material M at the first speed v1 and release the exiting material M at a third (variable) speed v3. The fourth guide means 16 may receive the incoming material M at the third speed v3 and release the exiting material M at the first speed v1. The third speed v3 may be variable so as to be intermittently nil in determined intervals of time during which the second machining means 6 is in the closed position.

The aforesaid first electric cam may drive the first and second guide means 10 and 12 so as to progressively increase the time of the moving steps of the material M (the time of the stop steps may remain constant), so as to increase progressively, consequently, also the period of the working cycles of the first machining means 4 at each working cycle.

Similarly, the aforesaid second electric cam may drive the third and fourth guide means 14 and 16 so as to increase progressively the time of the steps of moving the material M (the time of the stop steps may remain constant), so as to increase progressively, consequently, also the period of the working cycles of the second machining means 6 at each working cycle.

Adjusting the work period/frequency of the two operating groups (where the first operating unit comprises the operating means indicated by 4, 10, 12 and the second operating unit comprises the operating means indicated by 6, 14 e 16), independently of and differently from one another, may give rise to the double adjusting system that is able to make the variable double step distribution of the electrode tabs.

In the machining apparatus 102 (figures 11 and 12), the material M is fed along the feed path continuously (in particular at a constant speed), whereas the first machining means 4 is moved with reciprocating motion with outward and return cycles, and similarly also the second machining means 6 is moved with reciprocating motion with outward and return cycles, independently of the first machining means 4, with cycles provided with their own periods/frequencies and which are adjustable in a different way. The open and, respectively, closed positions of the first machining means 4 will be provided during the return and, respectively, the outward cycles of the first machining means 4. Patent publication US 2014/0174268 shows an embodiment of such (blanking) machining means operating with reciprocating motion (outward and return cycles). The second machining means 6 may be configured analogously, with open and, respectively closed positions of the second machining means 6 that will be provided during the return and, respectively, the outward cycles of the second machining means 6.

The machining apparatus 102 may thus be provided with a double adjusting system, for forming electrode tabs distributed with a double variable step, by virtue of the fact that the two machining means 4 and 6 may be controlled independently of one another with working cycles (closed outward cycle and open return cycle) having variable periods, each of which according to its own stroke.

## Claims

1. Machining apparatus comprising:
- a feed path of material (M);
- first machining means (4) arranged along said path to perform a succession of working cycles alternating open positions, in which it leaves free the passage of the material (M), and closed positions, in which it performs at least one machining operation on the material (M);
- second machining means (6) arranged along said path to perform a succession of working cycles alternating open positions, in which it leaves free the passage of the material (M), and closed positions, in which it performs at least one machining operation on the material (M), said second machining means (6) being arranged after said first machining means (4) with reference to a feed direction (F) of the material (M);
- means (8) for varying the length (LI, L2, L3, ...) of a part of said path between said first machining means (4) and said second machining means (6) so that said length (L1, L2, L3, ...) is different in at least two different working cycles of said first machining means (4) and/or second machining means (6).

2. Apparatus according to claim 1, wherein said first machining means (4) is configured to form electrode tabs (t2, t4, t6, ...) for an electrical energy storage device and/or wherein said second machining means (6) is configured to form electrode tabs (t1, t3, t5, ...) for an electrical energy storage device.

3. Apparatus according to claim 2, wherein the variation of said length (LI, L2, L3, ...) determines the variation in the distance between the electrode tabs (t1, t2, t3, ...) so that the material (M) can be wound to form the electrical energy storage device with the electrode tabs overlapping each other.

4. Apparatus according to any one of claims 1 to 3, wherein said means for varying the length (LI, L2, L3, ...) comprises at least one element (8) on which the material (M) which advances along said path runs, the position of said at least one element (8) being adjustable; said at least one element (8) comprising, in particular, an element that is rotatable about an axis of rotation.

5. Apparatus according to any one of claims 1 to 4, wherein: said means (8) for varying the length (LI, L2, L3, ...) is controlled to vary said length (LI, L2, L3, ...) when said first machining means (4) is in an open position and/or when said second machining means (6) is in an open position; and/or said means (8) for varying the length (LI, L2, L3, ...) is controlled so as to progressively increase said length (L1, L2, L3, ...) at each working cycle of said first machining means (4) and/or at each working cycle of said second machining means (6).

6. Apparatus according to any one of claims 1 to 5, wherein the period/frequency of the working cycles of said first machining means (4) is equal to the period/frequency of the working cycles of said second machining means (6), and wherein said apparatus comprises means for varying the period/frequency of the working cycles of said first machining means (4) and said second machining means (6) while the material (M) advances along said path, in particular so as to progressively increase the period of the working cycles of said first machining means (4) and said second machining means (6) at each working cycle.

7. Apparatus according to claim 6, wherein said first machining means (4) is configured to form electrode tabs (t2, t4, t6, ...) and/or wherein said second machining means (6) is configured to form electrode tabs (t1, t3, t5, ...), the machined material being intended to be wound to form a wound product provided with electrode tabs, said means for varying the period/frequency and said means for varying the length being controlled so that in the wound product the electrode tabs (t1, t2, t3, ...) are superimposed on each other.

8. Apparatus according to claim 6 or 7, wherein said means for varying the period/frequency comprises:
- first guide means (10) arranged before said first machining means (4) to receive the material (M) at a first speed (v1) and to deliver the material (M) at a second speed (v2); and
- second guide means (12) arranged after said second machining means (6) to receive the material (M) at said second speed (v2) and to deliver the material (M) at said first speed (v1);
said second speed (v2) being variable so as to be null intermittently with variable period/frequency during time intervals during which said first machining means (4) and/or said second machining means (6) is in the closed position, said first speed (v1) being not null, in particular constant, thereby the material (M) advances continuously.

9. Apparatus according to claim 6 or 7, wherein the material (M) is fed intermittently with feed and stop cycles, the open positions and, respectively, the closed positions of said first and second machining means (4; 6) being provided during the feeds and, respectively, the stops of the material (M), and wherein said means for varying the period/frequency comprises means for varying the period/frequency of the feed and stop cycles.

10. Apparatus according to any one of claims 1 to 9, wherein said first machining means (4) comprises at least one first cutting device of the material (M) and/or wherein said second machining means (6) comprises at least one second cutting device of the material (M).

11. Machining method comprising the steps of:
- feeding material (M) along a path;
- performing a succession of working cycles in which first machining means (4) arranged along said path alternates open positions in which it leaves free the passage of the material (M) and closed positions in which it performs at least one machining operation on the material (M);
- performing a succession of working cycles in which second machining means (6) arranged after said first machining means (4), with reference to a feeding direction (F) of the material, alternates open positions in which it leaves free the passage of the material (M) and closed positions in which it performs at least one machining operation on the material (M);
- varying the length (LI, L2, L3, ...) of a part of said path between said first machining means (4) and said second machining means (6) so that said length is different in at least two different working cycles of said first machining means (4) and/or second machining means (6);
wherein:
- the period/frequency of the working cycles of said second machining means (6) is, in particular, equal to the period/frequency of the working cycles of said first machining means (4), said method comprising, in particular, the step of varying the period/frequency of the working cycles of said first and second machining means while the material (M) advances along said path;
said first machining means (4) forms, in particular, electrode tabs (t2, t4, t6, ...) for an electrical energy storage device and/or wherein said second machining means (6) forms, in particular, electrode tabs (t1, t3, t5, ...) for an electrical energy storage device; the variation of said length (LI, L2, L3, ...) determining, in particular, the variation in the distance between the electrode tabs (t1, t2, t3, ...) so that the material (M) can be wound to form the electrical energy storage device with the electrode tabs overlapping each other.

12. Machining method comprising the steps of:
- feeding material (M) along a path;
- performing a succession of working cycles in which first machining means (4) assumes at each working cycle at least one open position in which it leaves free the passage of the material (M) and at least one closed position in which it performs at least one machining operation on the material (M);
- performing a succession of working cycles in which second machining means (6) assumes at each working cycle at least one open position in which it leaves free the passage of the material (M) and at least one closed position in which it performs at least one machining operation on the material (M), said second machining means (6) being arranged after said first machining means (4) with reference to a feeding direction (F) of the material (M);
- varying the period/frequency of the working cycles of said first machining means (4) and the period/frequency of the working cycles of said second machining means (6) while the material (M) advances along said path;
wherein said first machining means (4) forms, in particular, electrode tabs (t2, t4, t6, ...) for an electrical energy storage device and/or wherein said second machining means (6) forms, in particular, electrode tabs (t1, t3, t5, ...) for an electrical energy storage device; wherein said varying the period of the working cycles determines, in particular, the variation in a distance or step between the electrode tabs (t1, t2, t3, ...) so that the material (M) can be wound to form the electrical energy storage device with the electrode tabs (t1, t2, t3, ...) which are overlapping on each other.
